# FASCICULE DE BREVET EUROPEEN

(11) **EP 2 533 988 B1**
(45) Date de publication et mention de la délivrance du brevet: **14.05.2014**
(21) Numéro de dépôt: 11702984.3
(22) Date de dépôt: 04.02.2011
(51) Int. Cl.: B60C 11/12

(54) **PNEUMATIQUE POUR VEHICULES A DEUX ROUES COMPORTANT UNE BANDE DE ROULEMENT PRESENTANT DES INCISIONS**
REIFEN FÜR EIN ZWEIRÄDRIGES FAHRZEUG MIT EINER LAUFFLÄCHE MIT LAMELLEN
TIRE FOR A TWO-WHEELED VEHICLE, COMPRISING A TREAD HAVING SIPES

(30) Priorité: 12.02.2010 FR 1050989
(43) Date de publication de la demande: 19.12.2012
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: BESTGEN, Luc, F-63140 Chatel-Guyon (FR); GRAS, Bruno, F-63670 La Roche Blanche (FR)
(74) Mandataire: Le Cam, Stéphane Georges Elie
(86) Numéro de dépôt international: PCT/EP2011/051632
(87) Numéro de publication internationale: WO 2011/098401

(56) Documents cités:
- EP-A1- 1 987 964
- EP-A2- 0 829 381
- EP-A2- 0 963 864
- EP-A2- 1 029 714
- WO-A1-2004/018236
- WO-A1-2008/149611
- JP-A- 6 183 219
- JP-A- 2001 039 121

## Description

L'invention concerne un pneumatique destiné à équiper un véhicule et plus particulièrement destiné à équiper un véhicule à deux roues tel qu'une motocyclette et plus spécifiquement encore un pneumatique destiné à équiper une motocyclette d'indice de vitesse supérieur à W qui correspond à une vitesse 270 km/h.

Bien que non limité à une telle application, l'invention sera plus particulièrement décrite en référence à un tel pneumatique de motocyclette, ou moto, et plus spécifiquement encore en référence à un pneumatique destiné à équiper la roue avant.

Comme dans le cas de tous les autres pneumatiques, on assiste à une radialisation des pneumatiques pour motos, l'architecture de tels pneumatiques comprenant une armature de carcasse formée d'une ou deux couches d'éléments de renforcement faisant avec la direction circonférentielle un angle pouvant être compris entre 65° et 90°, ladite armature de carcasse étant radialement surmontée d'une armature de sommet formée d'éléments de renforcement. Il subsiste toutefois des pneumatiques non radiaux auquel se rapporte également l'invention. L'invention se rapporte encore à des pneumatiques partiellement radiaux, c'est-à-dire dont les éléments de renforcement de l'armature de carcasse sont radiaux sur au moins une partie de ladite armature de carcasse, par exemple dans la partie correspondant au sommet du pneumatique.

De nombreuses architectures d'armature de sommet ont été proposées, selon que le pneumatique sera destiné à la monte à l'avant de la moto ou à la monte à l'arrière. Une première structure consiste, pour ladite armature de sommet, à employer uniquement des câbles circonférentiels, et ladite structure est plus particulièrement employée pour la position arrière. Une deuxième structure, directement inspirée des structures couramment employées en pneumatiques pour véhicules de Tourisme, a été utilisée pour améliorer la résistance à l'usure, et consiste dans l'utilisation d'au moins deux couches de sommet de travail d'éléments de renforcement sensiblement parallèles entre eux dans chaque couche mais croisés d'une couche à la suivante en faisant avec la direction circonférentielle des angles aigus, de tels pneumatiques étant plus particulièrement adaptés pour l'avant des motos. Les dites deux couches de sommet de travail peuvent être associées à au moins une couche d'éléments circonférentiels, généralement obtenus par enroulement hélicoïdal d'une bandelette d'au moins un éléments de renforcement enrobé de caoutchouc.

Le choix des architectures de sommet des pneumatiques intervient directement sur certaines propriétés des pneumatiques telles que l'usure, l'endurance, l'adhérence ou bien encore le confort en roulage ou dans les cas notamment des motocyclettes la stabilité. Toutefois d'autres paramètres des pneumatiques tels que la nature des mélanges caoutchouteux constituant la bande de roulement interviennent également sur les propriétés dudit pneumatique. Le choix et la nature des mélanges caoutchouteux constituant la bande de roulement sont par exemple des paramètres essentiels concernant les propriétés d'usure. Le choix et la nature des mélanges caoutchouteux constituant la bande de roulement interviennent également sur les propriétés d'adhérence du pneumatique.

Il est encore connu pour d'autres types de pneumatiques de réaliser des bandes de roulement comportant des incisions plus particulièrement pour des pneumatiques destinés à rouler sur des sols enneigés, verglacés, ou mouillés.

De telles bandes de roulement sont habituellement pourvue d'éléments en reliefs de type nervures ou blocs, séparés les uns des autres dans le sens circonférentiel et/ou dans le sens transversal par des rainures transversales et/ou circonférentielles. Ces bandes de roulement comportent alors en outre des incisions ou fentes, dont les largeurs non nulles sont très inférieures à celles des rainures précédemment citées. En réalisant une pluralité de découpes débouchant sur la surface de roulement, on crée une pluralité d'arêtes de gomme pour couper la couche d'eau éventuellement présente sur la route, de manière à maintenir le pneumatique en contact avec le sol et à créer des cavités formant éventuellement des conduits destinés à recueillir et à évacuer l'eau présente dans la zone de contact du pneumatique avec la route dès lors qu'elles sont disposées de façon à déboucher en dehors de la zone de contact.

De nombreux types d'incisions ont déjà été proposés en vue d'améliorer l'adhérence du pneumatique sur les sols considérés.

Le document FR 2 418 719 décrit par exemple des incisions qui peuvent être normales à la surface de la bande de roulement ou inclinées par rapport à la direction perpendiculaire à ladite surface.

Le document FR 791 250 décrit des incisions présentant un tracé ondulé sur la surface de la bande de roulement.

Des pneumatiques connus sont également décrits dans les documents JP-A-2001 039 121, EP-A-0963 864 et WO-A-2008 149 611.

Les performances des motocyclettes conduisent aujourd'hui à vouloir mieux maîtriser la maniabilité du véhicule notamment dans le cas de certains usages et éventuellement de pouvoir proposer des pneumatiques différents pour la roue avant en fonction de l'usage.

Comme énoncé précédemment, l'architecture de l'armature sommet du pneumatique ou bien la nature des mélanges caoutchouteux de la bande de roulement peuvent permettre d'obtenir de tels effets.

Il peut encore être recherché de fournir des comportements du pneumatique qui peuvent varier selon la direction axiale du pneumatique

Concernant la maniabilité du véhicule, les inventeurs souhaitent proposer aux motards plus de précisions dans les retours d'efforts au guidon, soit en augmentant ceux-ci soit en les diminuant, selon l'usage qui est fait du véhicule.

L'invention a ainsi pour but de fournir un pneumatique pour motocyclette dont les propriétés en terme de maniabilité ou de retours d'efforts au niveau du guidon sont améliorées.

Ce but a été atteint selon l'invention par un pneumatique selon la revendication 1.

Au sens de l'invention, une incision est une découpe formant deux parois et dont la distance entre les parois mesurée selon la normale à un plan tangent à l'une des parois est inférieure à 1.5 mm et de préférence inférieure à 1 mm. Ladite distance au niveau de la surface de la bande de roulement est au moins égale à ladite distance au niveau du fond de l'incision, c'est-à-dire le niveau le plus éloigné de la surface de la bande de roulement. Dans le cas notamment d'un pneumatique pour motocyclette, l'épaisseur de la bande de roulement étant relativement peu importante, un élargissement de ladite distance depuis la surface de la bande de roulement vers le fond de l'incision ne peut exister au risque de provoquer un affaissement des bords de l'incision au niveau de la surface de la bande de roulement et ainsi conduire à une diminution de la surface de l'aire de contact avec le sol.

La direction longitudinale du pneumatique, ou direction circonférentielle, est la direction correspondant à la périphérie du pneumatique et définie par la direction de roulement du pneumatique.

La direction transversale ou axiale du pneumatique est parallèle à l'axe de rotation du pneumatique.

L'axe de rotation du pneumatique est l'axe autour duquel il tourne en utilisation normale.

Un plan circonférentiel ou plan circonférentiel de coupe est un plan perpendiculaire à l'axe de rotation du pneumatique. Le plan équatorial est le plan circonférentiel passant par le centre ou sommet de la bande de roulement.

Un plan radial ou méridien contient l'axe de rotation du pneumatique.

La direction radiale est une direction coupant l'axe de rotation du pneumatique et perpendiculaire à celui-ci. La direction radiale est l'intersection entre un plan circonférentiel et un plan radial.

Un pneumatique ainsi réalisé selon l'invention et monté sur la roue avant d'une motocyclette procure effectivement au pilote un retour au guidon différent de celui que procure un pneumatique ne comportant aucune incision ou bien comportant des incisions qui ne présentent pas d'inclinaison, c'est-à-dire que dans un plan circonférentiel, aucune partie d'une paroi d'une incision ne forme un angle avec la direction radiale compris ente 5 et 45°. Les inventeurs pensent avoir mis en évidence que l'inclinaison variable telle que proposée selon l'invention de l'incision par rapport à la direction radiale dans un plan de coupe circonférentiel modifie le retour d'efforts au guidon, c'est-à-dire la réaction du pneumatique au passage de l'aire de contact et ce que ressent le pilote.

Avantageusement pour permettre au pilote d'être sensible au retour d'efforts au guidon, dans un plan circonférentiel donné, l'angle formé entre au moins une partie d'une paroi d'une incision et la direction radiale est identique pour toutes les incisions présentant une intersection avec ledit plan.

L'angle formé entre au moins une partie d'une paroi de ladite au moins une incision et la direction radiale dans un premier plan circonférentiel étant différent de celui formé dans au moins un deuxième plan circonférentiel signifie que selon l'abscisse curviligne d'une paroi de ladite incision ledit angle formé entre au moins une partie d'une paroi de l'incision et la direction radiale varie.

Selon des variantes de l'invention, cet angle peut varier continûment ou bien être constant selon au moins une partie de l'abscisse curviligne.

La variation de l'inclinaison de l'incision par rapport à la direction radiale dans un plan de coupe circonférentiel du pneumatique selon l'invention sur la longueur de l'incision est obtenue en combinant le choix de l'angle formé entre au moins une partie d'une paroi de l'incision et la direction radiale, l'impact de l'orientation de l'incision elle-même par rapport à la direction circonférentielle et l'impact de la forme du pneumatique et notamment du profil axial très courbé.

Cette variation de l'angle selon l'abscisse curviligne d'une paroi de ladite incision permet d'adapter les retours d'efforts au niveau du guidon selon la position de la motocyclette en termes de carrossage, c'est-à-dire selon que le véhicule suit une ligne droite ou bien effectue un passage en courbe.

Selon un mode de réalisation préféré de l'invention, ladite au moins une partie d'une paroi de ladite au moins une incision formant un angle avec la direction radiale compris ente 5 et 45° est au contact de l'aire de contact. Selon ce mode de réalisation préféré de l'invention, si une partie seulement de la paroi de l'incision est inclinée, il s'agit de la partie de l'incision qui vient au contact de l'air de contact.

Il peut effectivement être avantageux d'un point de vue industriel de limiter l'inclinaison de l'incision sur sa partie débouchant sur la bande de roulement alors que la partie plus en profondeur n'est pas inclinée pour limiter les efforts exercés pour ouvrir le moule de cuisson après vulcanisation du pneumatique.

Selon d'autres modes de réalisation de l'invention, l'incision peut être inclinée sur toute sa hauteur, ou profondeur. La partie du moule qui pénètre le pneumatique pour former ladite incision peut alors être plus simple à réaliser.

Selon d'autres réalisations selon l'invention, l'incision peut être inclinée sur une partie seulement de sa longueur ; notamment lorsqu'une partie de l'incision est orientée selon une direction qui se rapproche de la direction circonférentielle, l'incision peut avantageusement ne pas être inclinée.

Selon un mode de réalisation préféré de l'invention, la différence entre l'angle formé entre au moins une partie d'une paroi de ladite au moins une incision et la direction radiale dans un premier plan circonférentiel et celui formé dans un deuxième plan circonférentiel est supérieure à 10°.

Selon une variante avantageuse de réalisation de l'invention, lorsque notamment la direction principale sur la surface de la bande de roulement de ladite au moins une incision forme au moins localement avec la direction circonférentielle un angle supérieur à 70°, l'angle formé entre au moins une partie d'une paroi de ladite au moins une incision et la direction radiale est inférieur à 30 °, dans un plan circonférentiel localisé dans la zone de l'incision où celle-ci forme un angle supérieur à 70° avec la direction circonférentielle.

Les inventeurs ont su mettre en évidence qu'un angle d'inclinaison inférieur à 30° a un effet suffisamment notable sur le retour des efforts au guidon dès lors que l'incision présente un angle avec la direction circonférentielle supérieure à 70°. Selon d'autres variantes de réalisation de l'invention des angles d'inclinaison supérieurs peuvent toutefois être envisagés pour obtenir des effets encore plus importants sur le retour des efforts au guidon.

Selon une autre variante de réalisation de l'invention, lorsque la direction principale sur la surface de la bande de roulement de ladite au moins une incision forme au moins localement avec la direction circonférentielle un angle inférieur à 30°, l'angle formé entre au moins une partie d'une paroi de ladite au moins une incision et la direction radiale est supérieur à 35 ° dans un plan circonférentiel localisé dans la zone de l'incision où celle-ci forme un angle inférieur à 30° avec la direction circonférentielle.

Les inventeurs ont mis en évidence que lorsque l'incision présente un angle avec la direction circonférentielle inférieure à 30°, des angles d'inclinaison de l'incision supérieurs à 35° sont nécessaires pour obtenir un effet notable sur le retour des efforts au guidon.

Selon ces variantes de réalisation il est donc possible d'obtenir des effets sur le retour des efforts au guidon sensiblement homogènes avec des incisions dont la direction principale sur la surface de la bande de roulement varie en faisant varier l'inclinaison de ladite incision le long de sa direction principale, l'angle formé entre au moins une partie d'une paroi de ladite au moins une incision et la direction radiale étant supérieur à 35 ° dans un plan circonférentiel lorsque la direction principale sur la surface de la bande de roulement de ladite au moins une incision forme avec la direction circonférentielle un angle inférieur à 30° et l'angle formé entre au moins une partie d'une paroi de ladite au moins une incision et la direction radiale étant inférieur à 30 ° dans un plan circonférentiel lorsque la direction principale sur la surface de la bande de roulement de ladite au moins une incision forme avec la direction circonférentielle un angle supérieur à 70°.

Les inventeurs ont encore su mettre en évidence qu'en fonction des différents paramètres constituant le pneumatique, une orientation de l'inclinaison de l'incision permet soit d'augmenter les retours d'efforts au guidon, soit de les diminuer. En effet, en fonction du choix des matériaux constituant la bande de roulement, du type d'architecture de l'armature de renforcement, que ce soit l'orientation ou bien la nature des éléments de renforcement, du profil du pneumatique, notamment selon sa direction axiale, les retours d'efforts au guidon peuvent varier et il peut être intéressant soit d'augmenter soit de diminuer le retour de ces efforts.

En conséquence selon un mode de réalisation de l'invention, l'orientation de l'angle formé entre au moins une partie d'une paroi de ladite au moins une incision et la direction radiale est opposé au sens de roulage du pneumatique.

Selon l'invention, la bande de roulement étant constituée d'au moins une partie centrale et de deux parties axialement extérieures, chacune des parties comporte au moins une partie d'une incision et, au niveau de la surfacé de la bande de roulement, l'orientation de l'angle formé entre au moins une partie d'une paroi de ladite au moins une partie d'une incision et la direction radiale dans la partie centrale est opposé à l'orientation de l'angle formé entre au moins une partie d'une paroi de ladite au moins une partie d'une incision et la direction radiale dans les parties axialement extérieures.

Selon cette réalisation de l'invention, lorsque les retours d'efforts sont homogènes sur la largeur axiale du pneumatique, il est possible de modifier les retours d'efforts au guidon en les augmentant et/ou les diminuant selon que la moto est pilotée en ligne droite ou qu'elle est utilisée en carrossage. En ligne droite, l'aire de contact correspond à la partie centrale de la bande de roulement et en carrossage, l'aire de contact est déplacée selon la direction axiale vers l'une ou l'autre des deux parties axialement extérieures.

On recherchera préférentiellement à augmenter les retours d'efforts au guidon sur la partie centrale de la bande de roulement pour notamment diminuer la maniabilité à vitesse élevée et à les diminuer sur les deux parties axialement extérieures pour au contraire améliorer la maniabilité en virage.

Selon un mode de réalisation préféré de l'invention, la différence entre l'angle formé entre au moins une partie d'une paroi de ladite au moins une incision et la direction radiale dans un premier plan circonférentiel passant par la partie centrale et celui formé dans un deuxième plan circonférentiel appartenant à une partie axialement extérieure est supérieure à 10°.

Selon une première variante de réalisation de l'invention, l'angle le plus petit formé entre au moins une partie d'une paroi d'une incision et la direction radiale dans un plan circonférentiel passant par la zone centrale de la partie centrale de la bande de roulement du pneumatique est supérieure à l'angle le plus grand formé entre au moins une partie d'une paroi d'une incision et la direction radiale dans un plan circonférentiel passant par la zone axialement extérieure d'une partie axialement extérieure de la bande de roulement du pneumatique.

La partie centrale de la bande de roulement est axialement délimitée par les points axialement les plus extérieurs de l'aire de contact correspondant à un roulage en ligne droite. Les parties axialement extérieures de la bande de roulement du pneumatique correspondent aux parties de la bande de roulement en dehors de la partie centrale.

La zone centrale de la partie centrale est délimitée axialement de part et d'autre du plan médian dans un plan radial, sur la surface de la bande de roulement, par un point distant d'un quart de la largeur de la partie centrale de la bande de roulement du plan médian du pneumatique.

La zone axialement extérieure d'une partie axialement extérieure de la bande de roulement du pneumatique est délimitée axialement dans un plan radial par un point distant d'un quart de la largeur de l'aire de contact de la bande de roulement du point axialement le plus extérieur de l'aire de contact contigu à la partie axialement extérieure.

L'aire de contact correspondant à un roulage en ligne droite est mesurée en écrasant verticalement selon une direction perpendiculaire à l'axe de rotation du pneumatique (c'est-à-dire que l'écrasement est réalisé verticalement, la roue étant dans un plan vertical) le pneumatique monté sur la jante nominale préconisée par l'ETRTO, gonflé à 2.5 bars sur une plaque non lubrifiée avec une charge correspondant à 60 % de la charge maximale préconisée du pneumatique (Load index).

Selon une deuxième variante de réalisation de l'invention, l'angle le plus grand formé entre au moins une partie d'une paroi d'une incision et la direction radiale dans un plan circonférentiel passant par la zone centrale de la partie centrale de la bande de roulement du pneumatique est inférieure à l'angle le plus petit formé entre au moins une partie d'une paroi d'une incision et la direction radiale dans un plan circonférentiel passant par la zone axialement extérieure d'une partie axialement extérieure de la bande de roulement du pneumatique.

L'une ou l'autre de ces variantes de réalisation peut notamment être choisie en fonction du retour au guidon souhaité.

Au sens de l'invention, selon ces variantes de réalisation de l'invention, les notions d'angle le plus grand et d'angle le plus petit sont considérées en valeur absolue.

Comme expliqué précédemment, en fonction de la constitution du pneumatique mais aussi en fonction de l'usage qui en sera fait, il est possible de choisir une orientation de l'angle formé entre au moins une partie d'une paroi de ladite au moins une partie d'une incision et la direction radiale dans la partie centrale en sens identique au sens de roulage et un angle opposé dans les deux parties axialement extérieures ou bien de proposer le contraire.

Une variante avantageuse de l'invention prévoit que la profondeur des incisions varie selon la direction axiale notamment pour tenir compte des vitesses d'usure différentes selon la direction axiale du pneumatique et pour obtenir des rigidités de la bande de roulement variables selon la direction axiale.

Selon l'invention, au moins la surface de la bande de roulement est constituée d'un premier mélange polymérique s'étendant sur au moins une partie de la partie centrale et d'au moins un deuxième mélange polymérique présentant des propriétés physico-chimique différentes de celles dudit premier mélange polymérique et couvrant au moins une partie des parties axialement extérieures de la bande de roulement.

Une telle caractéristique de l'invention autorise la réalisation d'une bande de roulement présentant par exemple des propriétés relatives à l'usure améliorées au centre de la bande de roulement et des propriétés relatives à l'adhérence améliorées sur les parties axialement extérieures.

Comme expliqué précédemment, la nature des mélanges polymériques constituant la bande de roulement peut avoir un effet sur les retours d'efforts au guidon. La présence de mélanges différents peut conduire à vouloir les augmenter et/ou les diminuer selon l'usage du véhicule et notamment son pilotage en ligne droite ou en courbe. En fonction de la nature des mélanges, il peut donc être nécessaire selon l'invention d'avoir des angles d'inclinaison des incisions en sens opposés dans la partie centrale et dans les parties axialement extérieures également pour obtenir des effets semblables ou opposés.

Selon un mode de réalisation avantageux de l'invention, afin de conférer des propriétés symétriques au pneumatique, la bande circonférentielle centrale est avantageusement centrée sur le plan équatorial. Selon d'autres modes de réalisations, destinés par exemple à des pneumatiques devant rouler sur un circuit comportant des virages essentiellement dans la même direction, la bande circonférentielle centrale peut ne pas être centrée sur le plan équatorial.

Des variantes avantageuses de l'invention peuvent prévoir la présence de cinq bandes circonférentielles ou plus pour former au moins la surface de la bande de roulement et ainsi conférer une évolution graduelle des propriétés de ladite bande de roulement depuis le plan équatorial vers les épaules. De même que précédemment, une telle réalisation peut être symétrique par rapport au plan équatorial ou non, la répartition des bandes différent soit par leur composition soit par leur répartition par rapport au plan équatorial.

Selon un mode de réalisation préféré de l'invention, le deuxième mélange polymérique est d'une composition différente de celle du premier mélange polymérique et de préférence encore, le deuxième mélange polymérique présente des propriétés d'adhérence supérieures à celles dudit premier mélange polymérique.

Selon d'autres modes de réalisations, des propriétés différentes peuvent être obtenues avec des mélanges identiques par des conditions de vulcanisation différentes.

Avantageusement encore, les épaisseurs radiales des premier et deuxième mélanges polymériques peuvent être différentes, de façon à optimiser axialement l'usure de la bande de roulement. Avantageusement encore les épaisseurs varient graduellement.

Selon un mode de réalisation préféré de l'invention, le deuxième mélange polymérique présente une dureté Shore A différente de celle du premier mélange polymérique.

La dureté Shore A dés mélanges polymériques après cuisson est appréciée conformément à la norme ASTM D 2240-86.

Selon un mode de réalisation préféré de l'invention, les éléments de renforcement de la structure de renfort de type carcasse font avec la direction circonférentielle un angle compris entre 65° et 90°.

Selon une variante de l'invention, la structure de renforcement de sommet comporte au moins une couche d'éléments de renforcement formant des angles avec la direction circonférentielle compris entre 10 et 80°.

Selon cette variante, la structure de renforcement de sommet comporte avantageusement au moins deux couches d'éléments de renforcement, les éléments de renforcement formant entre eux des angles compris entre 20 et 160°, d'une couche à la suivante, et de préférence supérieurs à 40°.

Selon une réalisation préférée de l'invention, les éléments de renforcement des couches de travail sont en matériau textile.

Selon un autre mode de réalisation de l'invention, les éléments de renforcement des couches de travail sont en métal.

Dans une réalisation avantageuse de l'invention, notamment pour optimiser les rigidités de la structure de renforcement le long du méridien du pneumatique, et en particulier aux bords des couches de travail, les angles formés par les éléments de renforcement des couches de travail avec la direction longitudinale sont variables selon la direction transversale tels que lesdits angles sont supérieurs sur les bords axialement extérieurs des couches d'éléments de renforcement par rapport aux angles mesurés au niveau du plan équatorial du pneumatique.

Comme expliqué précédemment dans le cas de mélanges polymériques de la bande de roulement différents, les variations d'angles des éléments de renforcement des couches de travail peuvent modifier les retours d'efforts au guidon selon la direction axiale.

De telles variations d'angles des éléments de renforcement des couches de travail peuvent conduire à vouloir augmenter et/ou diminuer les retours d'efforts au guidon selon l'usage du véhicule et notamment son pilotage en ligne droite ou en courbe. En fonction de la nature des éléments de renforcement et des variations d'angles selon la direction axiale, il peut donc être nécessaire selon l'invention d'avoir des angles d'inclinaison des incisions en sens opposés dans la partie centrale et dans les parties axialement extérieures également pour obtenir des effets semblables ou opposés.

Une réalisation de l'invention prévoit que le pneumatique est notamment constitué d'une structure de renforcement de sommet qui comporte au moins une couche d'éléments de renforcement circonférentiels ; selon l'invention, la couche d'éléments de renforcement circonférentiels est constituée d'au moins un élément de renforcement orienté selon un angle formé avec la direction longitudinale inférieur à 5°.

De préférence également, les éléments de renforcement de la couche d'éléments de renforcement circonférentiels sont métalliques et/ou textiles et/ou en verre. L'invention prévoit notamment l'utilisation d'éléments de renforcement de natures différentes dans une même couche d'éléments de renforcement circonférentiels.

De préférence encore, les éléments de renforcement de la couche d'éléments de renforcement circonférentiels présentent un module d'élasticité supérieur à 6000 N/mm².

Une variante de réalisation de l'invention prévoit avantageusement que les éléments de renforcement circonférentiels sont répartis selon la direction transversale avec un pas variable.

La variation du pas entre les éléments de renforcement circonférentiels se traduit par une variation du nombre d'éléments de renforcement circonférentiels par unité de longueur selon la direction transversale et en conséquence par une variation de la densité d'éléments de renforcement circonférentiels selon la direction transversale et donc par une variation de la rigidité circonférentielle selon la direction transversale.

Comme expliqué précédemment dans le cas de mélanges polymériques de la bande de roulement différents et des variations d'angles des éléments de renforcement des couches de travail, la variation du pas selon la direction axiale entre les éléments de renforcement circonférentiels peut modifier les retours d'efforts au guidon selon la direction axiale.

De telles variations du pas des éléments de renforcement circonférentiels peuvent conduire à vouloir augmenter et/ou diminuer les retours d'efforts au guidon selon l'usage du véhicule et notamment son pilotage en ligne droite ou en courbe. En fonction de la nature des éléments de renforcement et des variations du pas selon la direction axiale, il peut donc être nécessaire selon l'invention d'avoir des angles d'inclinaison des incisions en sens opposés dans la partie centrale et dans les parties axialement extérieures également pour obtenir des effets semblables ou opposés.

L'invention propose encore de combiner des angles d'inclinaison des incisions en sens opposés dans la partie centrale et dans les parties axialement extérieures pour obtenir des effets semblables ou opposés avec l'ensemble ou bien simplement plusieurs des différents paramètres précédemment cités que sont des mélanges polymériques différents en partie centrale et sur les parties axialement extérieures de la bande de roulement, des angles formés par les éléments de renforcement des couches de travail avec la direction longitudinale variables selon la direction transversale, et une variation du pas selon la direction axiale entre les éléments de renforcement circonférentiels.

D'autres détails et caractéristiques avantageux de l'invention ressortiront ci-après de la description des exemples de réalisation de l'invention en référence aux figures 1 à 4 qui représentent :
- figure 1, une vue partielle en perspective d'un schéma d'un pneumatique selon un premier mode de réalisation, qui ne correspond pas à l'invention mais qui est utile pour comprendre l'invention,
- figure 2, une vue partielle en perspective d'un schéma d'un pneumatique selon le premier mode de réalisation indiquant la mesure d'un angle en un point,
- figure 3a, une vue partielle en perspective d'un schéma d'un pneumatique selon un deuxième mode de réalisation qui ne correspond pas à l'invention mais qui est utile pour comprendre l'invention, indiquant la mesure d'un angle en un point,
- figure 3b, une vue partielle en perspective du schéma d'un pneumatique selon le deuxième mode de réalisation indiquant la mesure d'un angle en un deuxième point,
- figure 3c, une vue partielle en perspective du schéma d'un pneumatique selon le deuxième mode de réalisation de l'invention indiquant la mesure d'un angle en un troisième point,
- figure 4a, une vue partielle en perspective d'un schéma d'un pneumatique selon un troisième mode de réalisation qui correspond à l'invention indiquant la mesure d'un angle en un point,
- figure 4b, une vue partielle en perspective d'un schéma d'un pneumatique selon le troisième mode de réalisation qui correspond à l'invention indiquant la mesure d'un angle en un deuxième point.

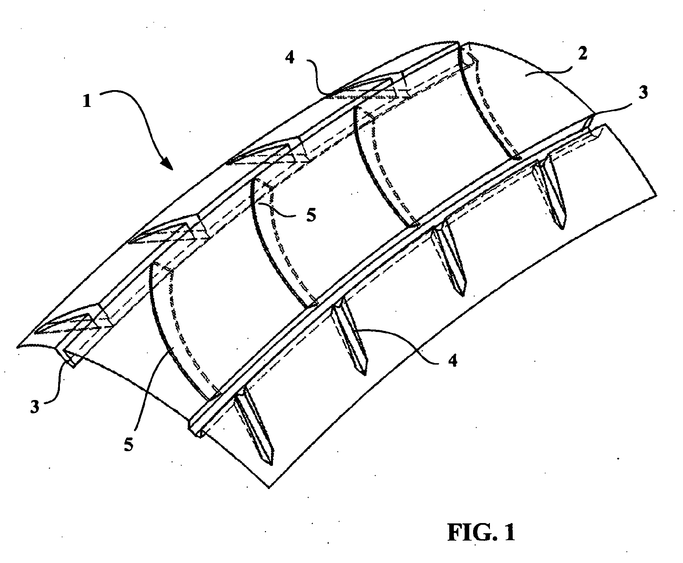

Les figures 1 à 4 ne sont pas représentées à l'échelle pour en simplifier la compréhension.

La figure 1 représente une vue partielle en perspective d'un pneumatique 1, et plus précisément de la surface extérieure 2 de sa bande de roulement, destiné à équiper la roue avant d'une motocyclette. Le pneumatique 1 présente une valeur de courbure supérieure à 0.15 et de préférence supérieure à 0.3. La valeur de courbure est définie par le rapport Ht/Wt, c'est-à-dire par le rapport de la hauteur de la bande de roulement sur la largeur maximale de la bande de roulement du pneumatique.

De manière non représentée sur les figures, le pneumatique 1 comprend une armature de carcasse constituée d'une couche comprenant des éléments de renforcement de type textile. La couche est constituée d'éléments de renforcement disposés radialement. Le positionnement radial des éléments de renforcement est défini par l'angle de pose desdits éléments de renforcement ; une disposition radiale correspond à un angle de pose desdits éléments par rapport à la direction longitudinale du pneumatique compris entre 65° et 90°.

L'armature de carcasse est ancrée de chaque côté du pneumatique 1 dans un bourrelet dont la base est destinée à être montée sur un siège de jante. Chaque bourrelet est prolongé radialement vers l'extérieur par un flanc, ledit flanc rejoignant radialement vers l'extérieur la bande de roulement.

Le pneumatique 1 comporte encore une armature de sommet constituée par exemple de deux couches d'éléments de renforcement faisant des angles avec la direction circonférentielle, lesdits éléments de renforcement étant croisés d'une couche à la suivante en faisant entre eux des angles par exemple de 50° dans la zone du plan équatorial, les éléments de renforcement de chacune des couches formant un angle par exemple égal à 25° avec la direction circonférentiel.

L'armature de sommet peut encore être constituée d'une couche d'éléments de renforcement circonférentiels en lieu et place des couches d'éléments de renforcement faisant des angles avec la direction circonférentielle ou bien combinée à celles-ci.

La bande de roulement 2 du pneumatique 1 comporte une sculpture constituée de rainures continues 3 orientées circonférentiellement et de rainures transversales 4, la direction principale de celles-ci présentant un léger angle avec la direction radiale pour donner une orientation à ladite sculpture. Cette orientation de la sculpture dans le cas d'un pneumatique équipant une roue avant est habituellement telle que le sens de l'orientation des sculptures et opposé au sens de rotation du pneumatique.

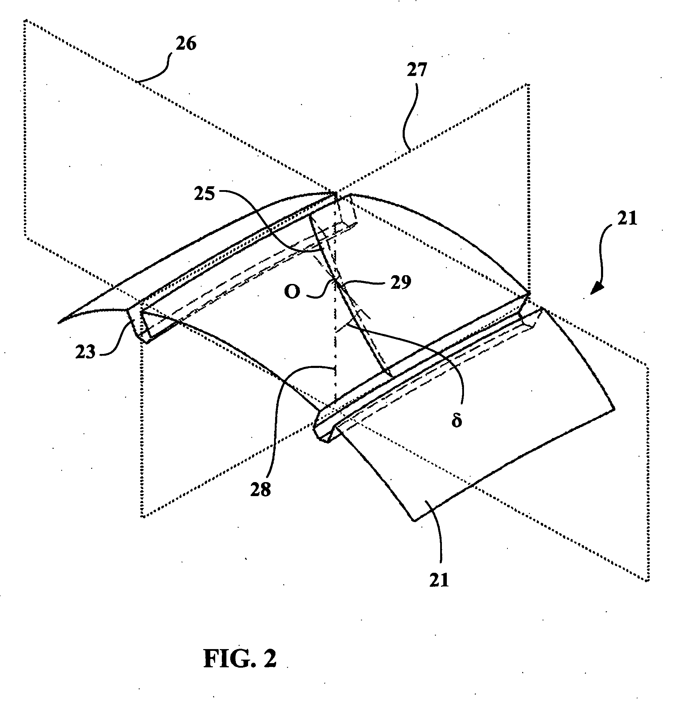

Conformément à l'invention, la bande de roulement comporte des incisions ou fentes 5, dont les largeurs non nulles sont très inférieures à celles des rainures 3 et 4 précédemment citées. Ces incisions forment conformément à l'invention dans un plan circonférentiel, un angle avec la direction radiale compris ente 5 et 45°, sur lequel il est revenu dans la description de la figure 2.

La figure 2 représente une vue partielle en perspective d'un pneumatique 21 semblable à celui de la figure 1 et qui en diffère par une représentation moins détaillée des rainures et la présence d'une seule incision 25 dont le tracé sur la surface de la bande de roulement 22 forme une courbe.

Sur la figure 2, sont représentés un plan méridien 26 et le plan équatorial 27 dont l'intersection forme une droite 28 orientée radialement et coupant l'incision 25 en un point O de la surface de la bande de roulement 22.

La droite 28 forme au point O un angle δ avec la courbe 29 qui représente l'intersection du plan équatorial 27 avec l'incision 25. Cet angle δ a une valeur de 34°.

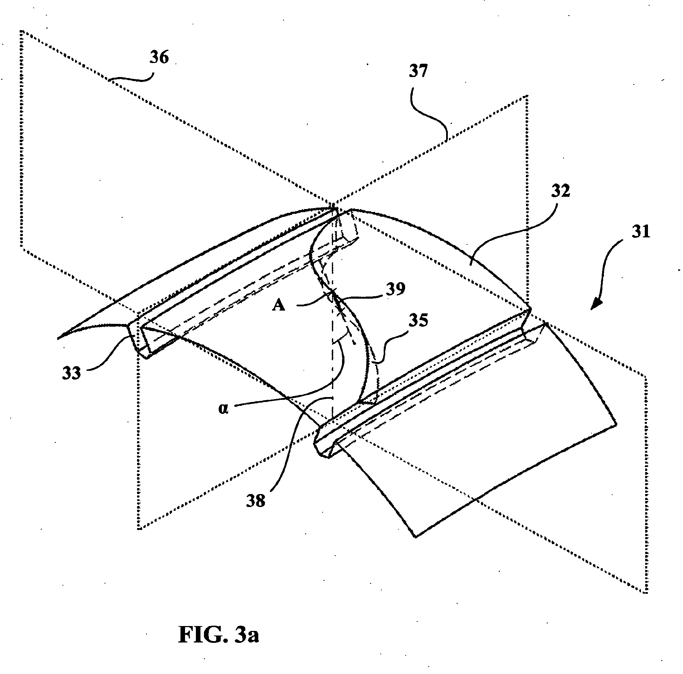

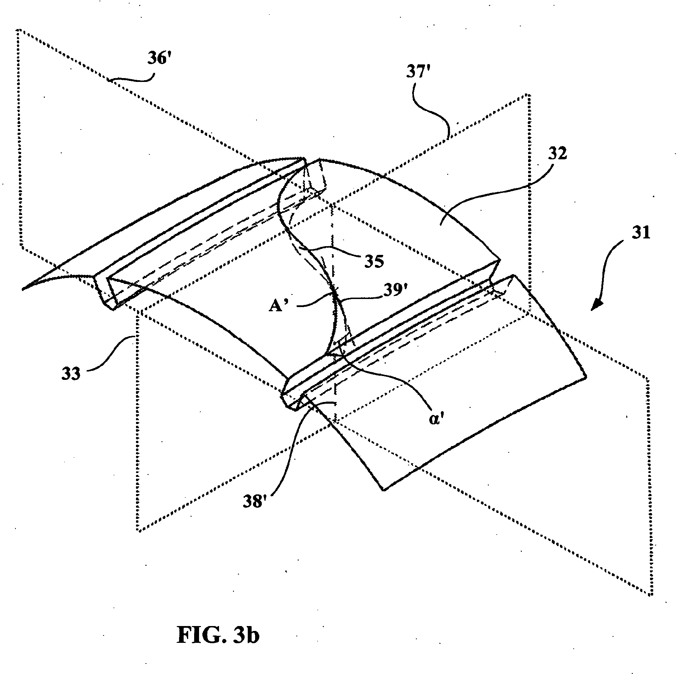

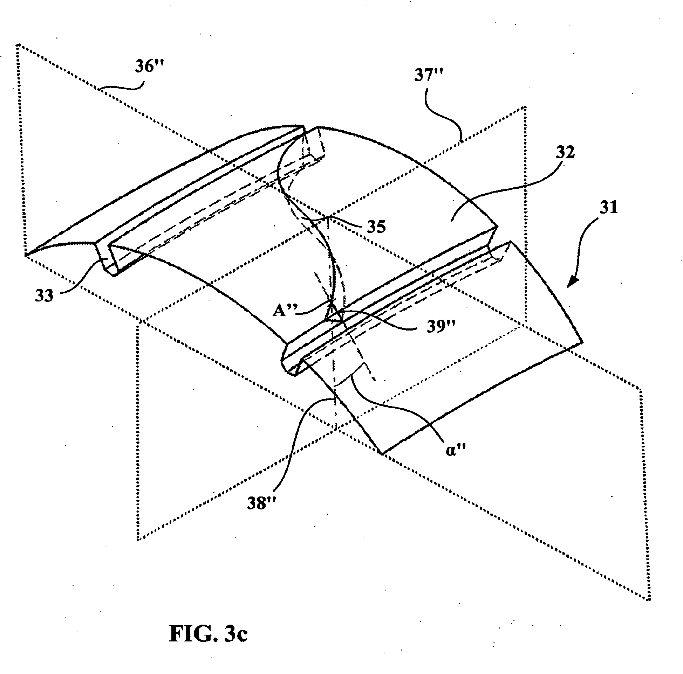

Sur les figures 3a, 3b et 3c est représentée une vue partielle en perspective d'un pneumatique 31 semblable à celui de la figure 2 et qui en diffère par la présence d'une incision 35 qui trace sur la bande de roulement 32 une forme en S.

Sur la figure 3a, sont représentés un plan méridien 36 et le plan équatorial 37 dont l'intersection forme une droite 38 orientée radialement et coupant l'incision 35 en un point A de la surface de la bande de roulement 32.

La droite 38 forme au point A un angle α avec la courbe 39 qui représente l'intersection du plan équatorial 37 avec l'incision 35. Cet angle α a une valeur de 9°.

La figure 3b illustre un angle α' en un point A' entre une droite 39' et une courbe 38', ces courbes étant définies comme dans le cas de la figure 3a mais à partir d'un autre plan circonférentiel 37' translaté axialement par rapport au plan équatorial 37 et d'un autre plan méridien 36' translaté circonférentiellement par rapport au plan 36 de la figure 3a tels que la droite 38' coupe l'incision 35 au point A' de la surface de la bande de roulement 32. L'angle α' a une valeur de 17°.

La figure 3c illustre un angle α" en un point A" entre une droite 39" et une courbe 38", ces courbes étant définies comme dans le cas des figures 3a et 3b mais à partir d'un autre plan circonférentiel 37" translaté axialement par rapport au plan équatorial 37 et d'un autre plan méridien 36" translaté circonférentiellement par rapport aux plans 36 et 36' des figure 3a et 3b tels que la droite 38" coupe l'incision 35 au point A" de la surface de la bande de roulement 32. L'angle α" a une valeur de 23°.

Lors de la conception du moule pour réaliser le pneumatique 31, il est prévu un dispositif permettant de réaliser l'incision 35 auquel on applique une rotation autour d'un axe pour créer l'inclinaison de l'incision au sens de l'invention. Du fait de la forme en S de l'incision 35 et de la forme du pneumatique, notamment sa courbure axiale, cet axe de rotation n'est tangent qu'en un point de l'incision, ce qui conduit à une variation continue de l'angle sur toute la longueur de l'incision comme le montre les valeurs mesurées ci-dessus.

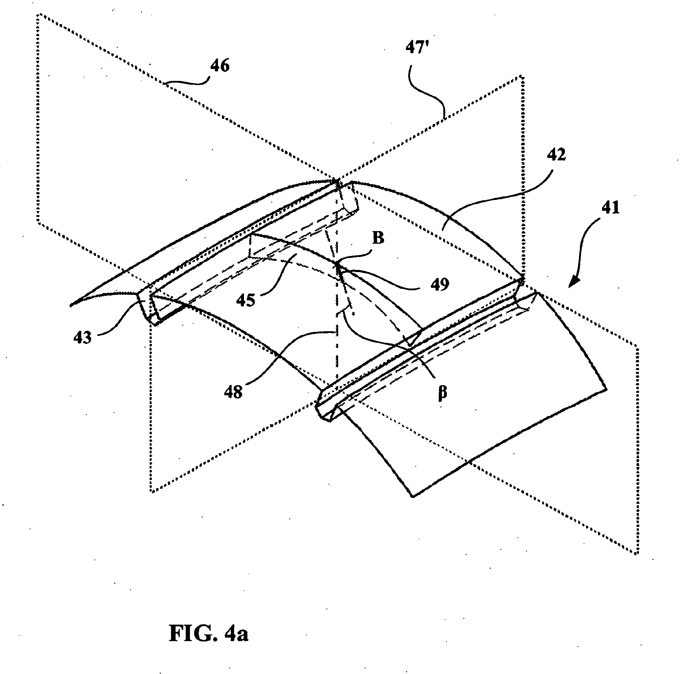

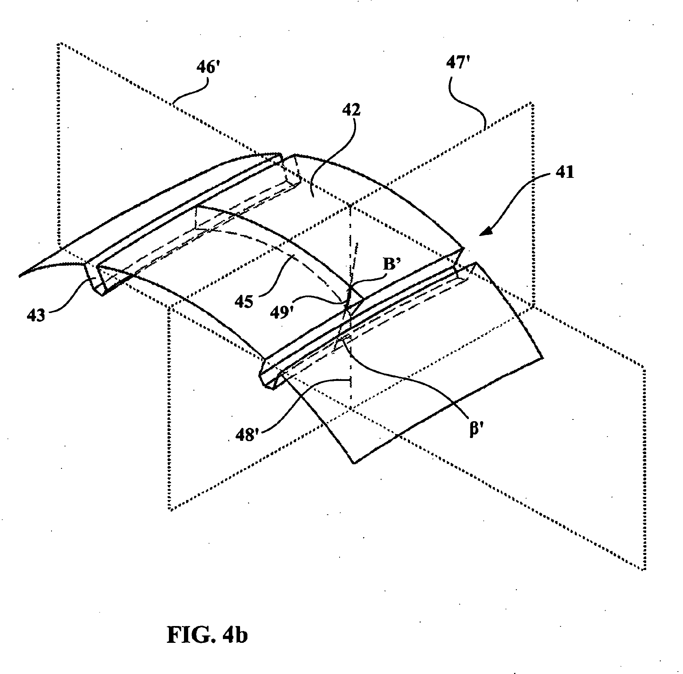

Sur les figures 4a et 4b, est représentée une vue partielle en perspective d'un pneumatique 41 semblable à celui des figures 2 et 3 et qui en différe par la présence d'une incision 45 sensiblement méridienne dont le sens d'orientation varie entre la partie centrale du pneumatique et les parties axialement extérieures.

Sur la figure 4a, sont représentés un plan méridien 46 et le plan équatorial 47 dont l'intersection forme une droite 48 orientée radialement et coupant l'incision 45 en un point B de la surface de la bande de roulement 42.

La droite 48 forme un angle β au point B avec la courbe 49 qui représente l'intersection du plan équatorial 47 avec l'incision 45. Cet angle β a une valeur de 10°.

La figure 4b illustre un angle β' au point B' entre une droite 49' et une courbe 48', ces courbes étant définies comme dans le cas de la figure 4a mais à partir d'un autre plan circonférentiel 47' translaté axialement par rapport au plan équatorial 47 et d'un autre plan méridien 46' translaté circonférentiellement par rapport au plan 46 de la figure 4a tels que la droite 48' coupe l'incision 45 au point B' de la surface de la bande de roulement 42. L'angle β' a une valeur de -10°. Le signe négatif est indiqué pour montrer le sens opposé à celui de l'angle β.

Conformément à l'une des variantes de l'invention, l'un de ces angles est orienté selon le sens de roulage du pneumatique et l'autre en sens inverse. Ces orientations en sens opposés de l'inclinaison de l'incision 45 vont a priori avoir des effets contraires sur les retours d'efforts au guidon selon que le pilote roule en ligne droite ou en carrossage, dès lors que la nature des mélanges polymériques et l'architecture sont homogènes sur la largeur axiale du pneumatique 41 ou tout au moins sur la largeur axiale de l'incision 45.

L'invention ne doit pas être comprise comme étant limitée à la description des exemples ci-dessus. Elle prévoit notamment de combiner les différents modes de réalisations de l'invention illustrés sur les figures avec des mélanges polymériques de la bande de roulement et/ou des architectures pouvant varier selon la direction axiale et notamment avec des pneumatiques comportant des bandes de roulement constitués de différents mélanges polymériques en fonction de la position axiale, des couches d'éléments de renforcement orientés circonférentiellement dont le pas varie selon la direction axiale et des angles des éléments de renforcement des couches de travail variables selon la direction axiale.

L'invention ne doit également pas être comprise comme étant limitée au cas d'un pneumatique destiné à équiper la roue avant d'un véhicule motorisé à deux roues mais peut présenter un intérêt pour une roue arrière. En effet, la présence d'incisions conformes à l'invention peut en outre avoir un effet sur le profil d'usure du pneumatique et dans certaines conditions d'utilisation, elle peut encore avoir un effet sur le comportement du pneumatique lors de passages de couples moteur ou freineur.

Des essais ont été réalisés avec un pneumatique de dimension 120/70 ZR 17 réalisé conformément aux cas des figures 4a et 4b, un angle positif correspondant au sens de roulage du pneumatique.

Ce pneumatique a été comparé à deux pneumatiques de référence identique au pneumatique de l'invention, si ce n'est l'absence totale d'incisions sur la bande de roulement du pneumatique R1 et la présence d'incisions ne présentant pas d'inclinaison et donc orientées radialement sur le pneumatique R2. Le nombre d'incisions est identique sur le pneumatique conforme à l'invention et sur le pneumatique de référence R2.

Les essais ont consisté à porter des notes relatives de maniabilité, lesdits pneumatiques étant montés sur la même motocyclette et piloté par le même pilote dans les mêmes conditions pour obtenir des appréciations lors d'accélérations ou de freinages autour de trois angles de carrossage différents correspondant respectivement à 10°, 20° et 30°.

Les résultats sont donnés dans le tableau ci-après :

| | Invention | R1 | R2 |
|---|---|---|---|
| Carrossage 10° | 2 | 3 | 3 |
| Carrossage 20° | 3 | 2.5 | 2.5 |
| Carrossage 30° | 2 | 1.5 | 1.5 |

Les résultats du pneumatique R2 montrent tout d'abord que la présence d'incisions non inclinées comme le propose l'invention n'a pas d'effet sur les retours d'efforts au guidon.

Les valeurs obtenues avec le pneumatique selon l'invention ont conduit à un pneumatique plus maniable que les pneumatiques de référence R1 et R2 à fort carrossage et moins maniable à faible carrossage et donc en ligne droite.

## Revendications

1. Pneumatique (1-41) pour véhicule motorisé à deux roues comportant une structure de renfort de type carcasse, formée d'éléments de renforcement, ancrée de chaque côté du pneumatique à un bourrelet dont la base est destinée à être montée sur un siège de jante, chaque bourrelet se prolongeant radialement vers l'extérieur par un flanc, les flancs rejoignant radialement vers l'extérieur une bande de roulement constituée d'au moins une partie centrale et deux parties axialement extérieures, **caractérisé en ce que** la partie centrale et au moins une partie axialement extérieure de la bande de roulement comportent au moins une partie d'une incision (5-45), **en ce qu'**au moins la surface (2-42) de la bande de roulement est constituée d'un premier mélange polymériques s'étendant sur au moins une partie de la partie centrale et d'au moins un deuxième mélange polymérique présentant des propriétés physico-chimique différentes de celles dudit premier mélange polymérique et couvrant au moins une partie des parties axialement extérieures de la bande de roulement, **en ce que** dans un plan circonférentiel, au moins une partie d'une paroi de ladite au moins une incision (5) forme un angle (α, β, δ) avec la direction radiale compris entre 5 et 45°, **en ce que** l'angle (α, β) formé entre au moins une partie d'une paroi de ladite au moins une incision et la direction radiale dans un premier plan circonférentiel (37-47) est différent de l'angle (α', β') formé entre au moins une partie d'une paroi de ladite au moins une incision et la direction radiale dans au moins un deuxième plan circonférentiel (37'-47') et **en ce que**, au niveau de la surface de la bande de roulement, l'orientation de l'angle (β) formé entre au moins une partie d'une paroi de ladite au moins une partie d'une incision et la direction radiale dans la partie centrale est opposée à l'orientation de l'angle (β') formé entre au moins une partie d'une paroi de ladite au moins une partie d'une incision et la direction radiale dans les parties axialement extérieures.

2. Pneumatique (1-41) selon la revendication 1, **caractérisé en ce que** ladite au moins une partie d'une paroi de ladite au moins une incision (5-45) formant un angle (α, β, δ) avec la direction radiale compris entre 5 et 45° est au contact de l'aire de contact.

3. Pneumatique (1-41) selon la revendication 1 ou 2, **caractérisé en ce que** la différence entre l'angle (α, β) formé entre au moins une partie d'une paroi de ladite au moins une incision (35-45) et la direction radiale dans un premier plan circonférentiel (37-47) et celui formé dans au moins un deuxième plan circonférentiel (37'-47') est supérieure à 10°.

4. Pneumatique (1-41) selon l'une des revendications 1 à 3, ladite au moins une incision formant au moins localement avec la direction circonférentielle un angle supérieur à 70°, **caractérisé en ce que** l'angle formé entre au moins une partie d'une paroi de ladite au moins une incision et la direction radiale est inférieur à 30 °.

5. Pneumatique (1-41) selon l'une des revendications 1 à 4, ladite au moins une incision formant au moins localement avec la direction circonférentielle un angle inférieur à 30°, **caractérisé en ce que** l'angle formé entre au moins une partie d'une paroi de ladite au moins une incision et la direction radiale est supérieur à 35 °.

6. Pneumatique (1-41) selon l'une des revendications précédentes, **caractérisé en ce que** la différence entre l'angle formé entre au moins une partie d'une paroi de ladite au moins une incision et la direction radiale dans un premier plan circonférentiel passant par la partie centrale et celui formé dans un deuxième plan circonférentiel appartenant à une partie axialement extérieure est supérieure à 10°.

7. Pneumatique (1-41) selon l'une des revendications précédentes, **caractérisé en ce que** les éléments de renforcement de la structure de renfort de type carcasse font avec la direction circonférentielle un angle compris entre 65° et 90°.

8. Pneumatique (1-41) selon l'une des revendications précédentes, **caractérisé en ce que** la structure de renforcement de sommet comporte au moins une couche d'éléments de renforcement, dite couche de travail, et **en ce que** les éléments de renforcement forment des angles avec la direction circonférentielle compris entre 10 et 80°.

9. Pneumatique (1-41) selon la revendication 8, **caractérisé en ce que** les angles formés par les éléments de renforcement de ladite au moins une couche de travail avec la direction longitudinale sont variables selon la direction transversale

10. Pneumatique (1-41) selon l'une des revendications précédentes, **caractérisé en ce que** la structure de renforcement de sommet comporte au moins une couche d'éléments de renforcement circonférentiels.

11. Pneumatique (1-41) selon la revendication 10, **caractérisé en ce que** les éléments de renforcement circonférentiels sont répartis selon la direction transversale avec un pas variable

12. Utilisation d'un pneumatique tel que décrit selon l'une des revendications 1 à 11 pour équiper la roue avant d'un véhicule motorisé à deux roues tel qu'une motocyclette.

## Patentansprüche

1. Reifen (1-41) für zweirädriges Kraftfahrzeug, der eine Verstärkungsstruktur des Typs Karkasse aufweist, die aus Verstärkungselementen gebildet ist, die auf jeder Seite des Reifens an einem Wulst verankert sind, dessen Basis dazu bestimmt ist, auf einen Felgensitz montiert zu sein, wobei sich jeder Wulst radial nach außen durch eine Flanke verlängert, wobei die Flanken radial nach außen eine Lauffläche erreichen, die aus mindestens einem zentralen Teil und zwei axial äußeren Teilen besteht, **dadurch gekennzeichnet, dass** der zentrale Teil und mindestens ein axial äußerer Teil der Lauffläche mindestens einen Teil einer Lamelle (5-45) aufweisen, dass mindestens die Oberfläche (2-42) der Lauffläche aus einem ersten Polymergemisch besteht, das sich auf mindestens einem Teil des zentralen Teils erstreckt, und aus mindestens einem zweiten Polymergemisch, das physikalischchemische Eigenschaften aufweist, die von denjenigen des ersten Polymergemischs verschieden sind und mindestens einen Teil der axial äußeren Teile der Lauffläche abdecken, dass in einer Umfangsebene mindestens ein Teil einer Wand der mindestens einen Lamelle (5) einen Winkel (α, β, δ) mit der radialen Richtung bildet, der zwischen 5 und 45° liegt, dass der Winkel (α, β), der zwischen mindestens einem Teil einer Wand der mindestens einen Lamelle und der radialen Richtung in einer ersten Umfangsebene (37-47) ausgebildet ist, von dem Winkel (α', β'), der zwischen mindestens einem Teil einer Wand der mindestens einen Lamelle und der radialen Richtung in mindestens einer zweiten Umfangsebene (37'-47') ausgebildet ist, verschieden ist, und dass auf dem Niveau der Oberfläche der Lauffläche die Ausrichtung des Winkels (β), der zwischen mindestens einem Teil einer Wand des mindestens einen Teils einer Lamelle und der radialen Richtung in dem zentralen Teil ausgebildet ist, der Ausrichtung des Winkels (β'), der zwischen mindestens einem Teil einer Wand des mindestens einen Teils einer Lamelle und der radialen Richtung in den axial äußeren Teilen ausgebildet ist, entgegengesetzt ist.

2. Reifen (1-41) nach Anspruch 1, **dadurch gekennzeichnet, dass** der mindestens eine Teil einer Wand der mindestens einen Lamelle (5-45), der einen Winkel (α, β, δ) mit der radialen Richtung zwischen 5 und 45° bildet, mit der Berührungsfläche in Berührung ist.

3. Reifen (1-41) nach Anspruch 1 oder 2, **dadurch gekennzeichnet, dass** der Unterschied zwischen dem Winkel (α, β), der zwischen mindestens einem Teil einer Wand der mindestens einen Lamelle (35-45) und der radialen Richtung in einer ersten Umfangsebene (37-47) und dem, der in mindestens einer zweiten Umfangsebene (37'-47') ausgebildet ist, größer ist als 10°.

4. Reifen (1-41) nach einem der Ansprüche 1 bis 3, wobei die mindestens eine Lamelle mindestens lokal mit der Umfangsrichtung einen Winkel größer als 70° bildet, **dadurch gekennzeichnet, dass** der Winkel, der zwischen mindestens einem Teil einer Wand der mindestens einen Lamelle und der radialen Richtung ausgebildet ist, kleiner ist als 30°.

5. Reifen (1-41) nach einem der Ansprüche 1 bis 4, wobei die mindestens eine Lamelle mindestens lokal mit der Umfangsrichtung einen Winkel kleiner als 30° bildet, **dadurch gekennzeichnet, dass** der Winkel, der zwischen mindestens einem Teil einer Wand der mindestens einen Lamelle und der radialen Richtung ausgebildet ist, größer ist als 35°.

6. Reifen (1-41) nach einem der vorhergehenden Ansprüche, **dadurch gekennzeichnet, dass** der Unterschied zwischen dem Winkel, der zwischen mindestens einem Teil einer Wand der mindestens einen Lamelle und der radialen Richtung in einer ersten Umfangsebene ausgebildet ist, der durch den zentralen Teil läuft, und demjenigen, der in einer zweiten Umfangsebene, die zu einem axial äußeren Teil gehört, ausgebildet ist, größer ist als 10°.

7. Reifen (1-41) nach einem der vorhergehenden Ansprüche, **dadurch gekennzeichnet, dass** die Verstärkungselemente der Verstärkungsstruktur des Typs Karkasse mit der Umfangsrichtung einen Winkel zwischen 65° und 90° bilden.

8. Reifen (1-41) nach einem der vorhergehenden Ansprüche, **dadurch gekennzeichnet, dass** die Scheitelverstärkungsstruktur mindestens eine Lage Verstärkungselemente, Arbeitslage genannt, aufweist, und dass die Verstärkungselemente Winkel mit der Umfangsrichtung zwischen 10 und 80° bilden.

9. Reifen (1-41) nach Anspruch 8, **dadurch gekennzeichnet, dass** die Winkel, die von den Verstärkungselementen der mindestens einen Arbeitslage mit der Längsrichtung gebildet sind, entlang der Querrichtung variabel sind.

10. Reifen (1-41) nach einem der vorhergehenden Ansprüche, **dadurch gekennzeichnet, dass** die Scheitelverstärkungsstruktur mindestens eine Lage umfänglicher Verstärkungselemente aufweist.

11. Reifen (1-41) nach Anspruch 10, **dadurch gekennzeichnet, dass** die umfänglichen Verstärkungselemente entlang der Querrichtung mit einem variablen Abstand verteilt sind.

12. Verwendung eines Reifens, wie nach einem der Ansprüche 1 bis 11 beschrieben, zum Ausstatten des Vorderrads eines zweirädrigen Kraftfahrzeugs, wie zum Beispiel eines Motorrads.

## Claims

1. Tyre (1-41) for a motorized two-wheeled vehicle comprising a reinforcing structure of the carcass type, made up of reinforcing elements, anchored on each side of the tyre to a bead the base of which is intended to be mounted on a rim seat, each bead being extended radially outwards by a sidewall, the sidewalls radially towards the outside joining to a tread consisting of at least one central part and two axially external parts, **characterized in that** the central part and at least one axially external part comprise at least one part of one incision (5-45), **in that** at least the surface (2-42) of the tread consists of a first polymer compound extending over at least one part of the central part and of at least one second polymer compound having physico-chemical properties different from those of the said first polymer compound and covering at least one part of the axially external parts of the tread, **in that** in a circumferential plane, at least part of one wall of the said at least one incision (5) forms with the radial direction an angle (α, β, δ) of between 5 and 45°, **in that** the angle (α, β) formed between at least one part of one wall of the said at least one incision and the radial direction in a first circumferential plane (37-47) is different from the angle (α', β') formed between at least one part of one wall of the said at least one incision and the radial direction in at least one second circumferential plane (37', 47') and **in that**, at the surface of the tread, the orientation of the angle (β) formed between at least one part of one wall of the said at least one part of one incision and the radial direction in the central part is the opposite of the orientation of the angle (β') formed between at least one part of one wall of the said at least one part of one incision and the radial direction in the axially external parts.

2. Tyre (1-41) according to Claim 1, **characterized in that** the said at least one part of one wall of the said at least one incision that forms with the radial direction an angle (α, β, δ) of between 5 and 45° is in contact with the contact patch.

3. Tyre (1-41) according to Claim 1 or 2, **characterized in that** the difference between the angle (α, β) formed between at least one part of one wall of the said at least one incision (35-45) and the radial direction in a first circumferential plane (37-47) and that formed in at least one second circumferential plane (37', 47') is greater than 10°.

4. Tyre (1-41) according to one of Claims 1 to 3, the said at least one incision at least locally with the circumferential direction forming an angle greater than 70°, **characterized in that** the angle formed between at least one part of one wall of the said at least one incision and the radial direction is less than 30°.

5. Tyre (1-41) according to one of Claims 1 to 4, the said at least one incision at least locally with the circumferential direction forming an angle smaller than 30°, **characterized in that** the angle formed between at least one part of one wall of the said at least one incision and the radial direction is greater than 35°.

6. Tyre (1-41) according to one of the preceding claims, **characterized in that** the difference between the angle formed between at least one part of one wall of the said at least one incision and the radial direction in a first circumferential plane passing through the central part and that formed in a second circumferential plane belonging to an axially external part is greater than 10°.

7. Tyre (1-41) according to one of the preceding claims, **characterized in that** the reinforcing elements of the carcass-type reinforcing structure make with the circumferential direction an angle of between 65° and 90°.

8. Tyre (1-41) according to one of the preceding claims, **characterized in that** the crown reinforcing structure comprises at least one layer of reinforcing elements, known as the working layer, and **in that** the reinforcing elements make with the circumferential direction angles of between 10 and 80°.

9. Tyre (1-41) according to Claim 8, **characterized in that** the angles made by the reinforcing elements of the said at least one working layer with the longitudinal direction can vary in the transverse direction.

10. Tyre (1-41) according to one of the preceding claims, **characterized in that** the crown reinforcing structure comprises at least one layer of circumferential reinforcing elements.

11. Tyre (1-41) according to Claim 10, **characterized in that** the circumferential reinforcing elements are distributed in the transverse direction at a variable pitch.

12. Use of a tyre as described in one of Claims 1 to 11 to be fitted to the front wheel of a motorized two-wheeled vehicle such as a motorbike.
